**Europäisches Patentamt**

**European Patent Office**

**Office européen des brevets**

(11) Veröffentlichungsnummer: **0 463 546 A1**

# EUROPÄISCHE PATENTANMELDUNG

(21) Anmeldenummer: **91109990.1**

(22) Anmeldetag: **18.06.91**

(51) Int. Cl.5: **C05F 7/00**, C05F 17/02, C05F 17/00

(30) Priorität: **18.06.90 DE 4019389**

(43) Veröffentlichungstag der Anmeldung:
**02.01.92 Patentblatt 92/01**

(84) Benannte Vertragsstaaten:
**AT BE CH DE FR GB LI NL**

(71) Anmelder: **ALLIED COLLOIDS GmbH**
**Tarpenring 23**
**W-2000 Hamburg 62(DE)**

(72) Erfinder: **Heydrich, Klaus**
**im Wiesengrund 26**
**W-6384 Schmitten(DE)**

(74) Vertreter: **Alber, Norbert et al**
**Patent- und Rechtsanwälte-Hansmann,**
**Vogeser, Boecker, Alber,**
**Albert-Rosshaupter-Strasse 65**
**W-8000 München 70(DE)**

(54) **Verfahren und Vorrichtung zur biologischen Trocknung von Klärschlamm.**

(57) Verfahren zum einstufigen Behandeln von Rohschlämmen mittels biologischer Trocknung und Massereduzierung, wobei durch chargenweise, aerobe mikrobielle Vor- und Nachrotte ein humusähnliches Substrat erhalten wird. Die Zugabe organischer Zuschlagstoffe bzw. des Rückgutes erfolgt ausreichend lange vor der mechanischen Vorentwässerung und die bei der Vorrotte entstehende Wärme wird zum Vorwärmen der aktiv einzublasenden Luft bzw. direkt zum Vorwärmen des Rohschlammes verwendet.

Weitere Ausgestaltungen betreffen vorteilhafte Vorrichtungen zur Durchführung des Verfahrens.

EP 0 463 546 A1

Die Beseitigung von Klärschlämmen wird ein immer dringenderes Problem, nachdem die Ausbringung als landwirtschaftliches Düngemittel wegen des Schwermetallgehaltes und anderer Schadstoffgehalte der Klärschlämme immer seltener möglich ist.

Klärschlämme entstehen durch die Aufbereitung kommunaler und z.T. auch industrieller Abwässer, und fallen in den mechanischen, biologischen und chemischen Klärstufen einer Kläranlage mit hohem (über 90%) Wasseranteil und durchschnittlich mit 50 bis 90% OTS-Anteil flüssig an.

Da die landwirtschaftliche Verbrennung dieser dünnflüssigen Schlämme stark abnimmt, werden sie maschinell entwässert und mit Zuschlagstöcken zur Verfestigung angereichert, deponiert oder thermisch bei über 100 °C getrocknet oder verascht.

Chemisch mit Polyelektrolyten konditionierte Schlämme weisen nach der maschinellen Entwässerung nur schlammspezifische Feststoffgehalte von ca. 20 - 30 % auf, bestehen also überwiegend aus Wasser und können so aufgrund ihrer pastösen Struktur nicht deponiert werden.

Durch Zuschlagstöcke wie Kalk, Zementstaub, Asche und Ähnliches verfestigt, unter Inkaufnahme der Mengenzunahme, werden sie deponiert, alternativ getrocknet oder verbrannt.

Es wird nach Wegen gesucht, diesen Klärschlamm entweder zu entsorgen, wobei möglichst geringe Nachteile in Kauf genommen werden sollen oder gar eine sinnvolle Verwendung für den Klärschlamm zu finden.

Bei der klassischen thermischen Trocknung des bereits maschinell entwässerten Klärschlammes wird das Wasser verdampft, wobei leichte wasserdampflüchtige organische Inhaltsstoffe des Schlammes als Brüden mitgerissen werden.

. Der Hauptanteil der OTS bleibt dabei erhalten, es findet jedoch eine Massereduzierung bis zu 80% statt. der Nachteil dieser Trocknung besteht darin, daß Brüden entstehen, die äußerst geruchsintensiv und teilweise auch giftig sind. Diese müssen durch Wäscher oder Rückführung in den ungetrockneten Schlamm etc. wiederum separat beseitigt werden. Darüber hinaus ist für diese Trocknung ein hoher Energiebedarf notwendig, das entstehende Endprodukt ist teilweise wasseraufnahmefähig. Zusammen mit dem hohen OTS-Gehalt ergeben sich dadurch sehr unerwünschte Nebenwirkungen: Wird ein derart getrockneter Schlamm in einer Deponie abgelagert, so vermehren sich darin wegen des hohen OTS-Gehaltes Mikroben, die einerseits langfristig eine Umsetzung des enthaltenen Kohlenstoffs in Kohlenmonoxid und Kohlendioxid und andere flüssige und gasförmige Schadstoffe bewirken, also das gefürchtete Ausgasen der Deponie, und zum anderen eine über lange Zeiträume fortschreitende Wiederverflüssigung des Deponiematerials bewirken, wodurch eine Art künstlicher Sumpf entsteht, der eloiert und das gefürchtete Deponiewasser entstehen läßt.

Die Deponierung wird heute anstelle mit getrocknetem Klärschlamm auch mit Roh- oder Faulschlamm versucht, welcher durch Zugabe großer Mengen von Kalk und anderen Feststoffen zwar in seinem TS-Gehalt erhöht wird, um die Masse überhaupt deponierfähig zu machen, was jedoch andererseits die abzulagernde Menge zusätzlich stark erhöht.

Statt der Deponierung kann der getrocknete Schlamm auch verbrannt werden, was die stärkste Mengenreduzierung bringt, aber auch den höchsten Aufwand hinsichtlich der Investitionen für die Verbrennungsanlage und auch der Energiekosten und Unterhaltskosten einer solchen Anlage bedingt. Weiterhin wird diese Mengenreduzierung mit einem enorm hohen Anfall an Kohlendioxid erkauft, da bei der Verbrennung die gesamte organische Trockensubstanz in Kohlendioxid umgewandelt wird. Zusätzlich müssen die bei der Verbrennung entstehenden Brüden und staubförmigen Schadstoffe mit aufwendigen Maßnahmen zurückgehalten werden.

Die weiterhin momentan propagierten Methoden wie das sogenannte "thermische Cracken" im Zementwerk, in Kraftwerken, oder auch das Einarbeiten bei der Bitumenerzeugung sind allenfalls Notlösungen, da das thermische Cracken nichts anderes als eine Verbrennung mit anderen Öfen einschließlich der beschriebenen Nachteile ist, und auch die Einarbeitung in Bitumen als Fahrbahnbeläge z.Zt. nicht ausreichend gesichert ist, da Auswaschungen und chemische Umsetzungen sowie physikalische Bindungen bei diesem Vorgang noch nicht ausreichend bekannt sind.

Demgegenüber stellt das der vorliegenden Erfindung zugrundeliegende biologische Trocknen ein erdähnliches Produkt zur Verfügung, welches etwa 20 bis 40% Wasser enthält und nicht von selbst entflammbar ist. Ein solches Substrat kann - je nach Schadstoffbelastung - als äußerst hochwertiger landwirtschaftlicher Dünger verwendet oder problemlos in einer Deponie abgelagert werden, ohne daß eine spätere Verflüssigung, Ausgasung oder Selbstentzündung stattfinden kann. Ebenso können enthaltene Schadstoffe wie Schwermetalle etc. aus dem Substrat nach einer Deponierung nicht ausgewaschen werden, da aufgrund der biochemischen Umsetzung eine Bindung dieser Stoffe im Substrat erfolgt, die durch eine Auswaschung nicht gelöst werden kann.

Ein weiterer Vorteil liegt darin, daß das so entstehende Substrat mit einem OTS-Gehalt von über. 10% in der Größenordnung von Ackerböden liegt, der in unseren Breiten etwa 5% Humus, also OTS enthält. Damit kann das gewonnene Substrat als hochwertiger Pflanzendünger verwendet werden, während ein deutlich höherer OTS-Gehalt des Substrates zu unerwünschtem Riesenwuchs vor allem der Blatt-Teile dieser Pflanzen führen würde.

Da durch die Anregung des Pflanzenwachstums zusätzlich durch die Pflanze vermehrt Kohlendioxid in Sauerstoff umgesetzt wird, wirkt eine solche Verwendung des gewonnenen Substrates zusätzlich der momentanen Überproduktion an Kohlendioxid in der Atmosphäre entgegen.

Eine biologische Trocknung oder Komopostierung von Klärschlämmen ist zwar an sich bereits bekannt, jedoch wurde dabei in aller Regel zunächst eine anaerobe Faulung des Klärschlammes als ersten Schritt durchgeführt, was jedoch hohe Kosten mit sich brachte für Investitionen an Faultürmen und deren Betriebskosten.

Weiterhin war es üblich, im Falle eines zu geringen Gehaltes an Trockensubstanz bzw. an organischer Trockensubstanz dem Ausgangsprodukt erst nach dem mechanischen Entwässern ggfs. Zuschlagstoffe in Form von Rückgut oder fremden, organischen Kohlenstoffträgern zuzugeben um die richtigen Ausgangsparameter für die biologische Trocknung zu schaffen.

Diese nach Herrn Kneer benannte Methode war allgemein üblich, da es sinnlos erschien, dem relativ flüssigen Ausgangsprodukt zunächst Feststoffe in Form von Rückgut oder anderen Kohlenstoffträgern zuzusetzen und diese dadurch etwas trockenere, jedoch mengenmäßig größere Masse mechanisch zu entwässern.

Es ist daher die Aufgabe der vorliegenden Erfindung, ein Verfahren zum Umwandeln von Klärschlamm in ein humusähnliches Substrat sowie Vorrichtungen zu dessen Durchführung zu bieten, welche aufgrund eines optimierten Prozeßablaufes nur geringe Betriebskosten verursacht und darüber hinaus die Vorrichtungen so zu gestalten, daß die aus Investititions- und laufenden Kosten zusammengesetzten Gesamtkosten ein Miniumum betragen, ohne das Ziel aufzugeben, ein humusähnliches Substrat als Endprodukt zu erhalten, mit den oben beschriebenen positiven Eigenschaften.

Kern des biologischen Trocknungsvorganges ist die sogenannte Vorrotte, bei der nacheinander verschiedene Generationen von Mikrobenstämmen sich zunächst stark vermehren und anschließend, wenn die für sie optimalen Bedingungen hinsichtlich feuchte und Temperatur nicht mehr gegeben sind, verarmen, während eine an die neuen Bedingungen besser angepaßte Mikrobengeneration heranwächst. Diese Mikroben bewirken ein Umsetzen des vorhandenen Kohlenstoffes vornehmlich in Kohlendioxid und Wasser. Dieses Wasser sowie das physikalisch im Ausgangsprodukt enthaltene Wasser soll zum Großteil aus dem Substrat entfernt werden. Dazu dient einerseits die durch die Mikrobentätigkeit entstehende Wärme und andererseits die aktiv und gleichmäßig in das Substrat eingeblasene vorgewärmte Luft, die einerseits das physikalisch gebundene Wasser herausreissen soll und andererseits die aeroben Mikroben ausreichend mit Luft versorgt, um die Entstehung von Kohlenmonoxid und anderen Schadstoffen anstatt von Kohlendioxid aufgrund von Sauerstoffmangel weitestgehend zu vermeiden.

Diese Vorrotte wird chargenweise durchgeführt, da die Einhaltung der optimalen chemischen, biologischen und physikalischen Bedingungen aufgrund der wechselnden Zusammensetzung des Ausgangsproduktes oft problematisch ist und damit u.U. auch aufgrund einer Fehlsteuerung ein verdorbenes Substrat, welches beispielsweise zu faulen beginnt, erzielt wird.

Während in einem kontinuierlich laufenden Prozeß eine solche Fehlsteuerung nur sehr schwer und mit hohen Mengenverlusten abzustellen ist, ist bei chargenweiser Durchführung nur die jeweils betroffene Charge als Ausschuß zu behandeln.

Die mikrobielle Vorrotte läuft innerhalb von fünf bis acht Tagen ab, wenn sich die Temperatur zwischen 50 und 90°c bewegt und das Substrat bis auf höchstens 2 m Höhe aufgeschüttet wird, um die Pressung aufgrund des Eigengewichtes gering zu halten. Nur dann können die geforderten mindestens 30 bis 50% Porenvolumen während der Vorrotte eingehalten werden.

Hat die Trockensubstanz des Schlammes zu Beginn der Vorrotte mindestens 20%, vorzugsweise mindestens 40% betragen, wovon wiederum über die Hälfte organische Trockensubstanz sein sollte, so läßt sich innerhalb der angegebenen Zeit ein Substrat mit 60 - 65 % TS, hiervon etwa 1/3 bis 1/4 OTS, erzielen. Zusätzlich entsteht bei dieser Vorrotte Wärme, die entweder zum Vorwärmen der während der Vorrotte einzublasenden Luft bzw. zum Vorwärmen des Ausgangsproduktes, also des Klärschlammes, zwecks niederthermischer Konditionierung benutzt werden kann.

Um die geforderten Ausgangsbedingungen hinsichtlich TS und OTS mit möglichst geringem Kosten- und daher auch Energieaufwand einzuhalten, wird das Ausgangsprodukt vor der Vorrotte mechanisch entwässert unter vorheriger Zugabe eines synthetischen Flockungsmittels, welches ein besseres mechanisches Entwässerungsergebnis mit sich bringt. Die Zugabe der Zuschlagstoffe, also des Rückgutes bzw. eines anderen organischen Kohlenstoffträgers erfolgt dabei zum Teil vor der mechanischen Entwässerung und vor der Zugabe des synthetischen Flockungsmittels und ggfs. zum Teil nach der mechanischen Entwässerung, was eine Verbesserung der Struktur des zu trocknenden Substrates und eine Impfung mit Mikroben mit sich bringt. Die Korngröße des Rückgutes soll dabei in der Größenordnung von 1 mm liegen und eine möglichst große Oberfläche besitzen, um einen innigen Austausch an Mikroben und Feuchtigkeit mit dem feuchteren Ausgangsprodukt zu ermöglichen.

Die Vermengung mit den Zuschlagstoffen und auch die mikrobielle Vorrotte selbst laufen besonders gut ab, wenn bereits das Ausgangsprodukt, also der Klärschlamm auf 40 bis 65° C vorgewärmt werden. Die bei der Vorrotte entstehende Wärme kann damit entweder zum Vorwärmen des Klärschlammes oder zum Vorwärmen der bei der Vorrotte einzublasenden Luft verwendet werden.

Die Belüftung während der Vorrotte sollte etwa 5 bis 10 Kubikmeter pro Kubikmeter und Stunde Substrat betragen, wobei diese Luft eine möglichst geringe Feuchtigkeit besitzen sollte und mit höchstens einer Atmosphäre Überdruck gleichmäßig in die Charge eingebracht wird, also in aller Regel in die Unterseite der Charge, von wo die Luft durch das Substrat nach oben strömt und dort abgesaugt wird. Ein mittels Druckluftdüsen gezieltes Einschießen von Luftkanälen durch hohen Überdruck ist bei einem Porenvolumen von 30 bis 50% und darüber nicht mehr notwendig. Somit wird die Luft unter dem Substrat lediglich gleichmäßig verteilt und strömt dann durch eine Vielzahl von Öffnungen, also flächenartig und nicht punktuell, nach oben. Dadurch wird gegenüber den bekannten Verfahren eine weitere Reduzierung des Energiebedarfs während des laufenden vorganges erreicht.

Wichtig ist auch, daß die Zuschlagstoffe in dem richtigen zeitlichen Abstand vor der mechanischen Entwässerung zugegeben werden, um einerseits keine physikalische Trennung Zu ermöglichen und andererseits einen weitgehenden Austausch von physikalisch gebundenem Wasser und Mikroben in beiden Richtungen, also von dem trockenen Zuschlagstoff zum nassen Ausgangsprodukt und umgekehrt, zuzulassen. Der richtige zeitliche Abstand liegt zwischen einer halben und acht, vorzugsweise drei bis vier Stunden vor der Zugabe der synthetischen Flockungsmittel, welche wiederum unmittelbar, teilweise nur einige Sekunden, vor dem mechanischem Entwässern erfolgt.

Ein wichtiger Gesichtspunkt des vorliegenden Verfahrens liegt darin, daß es nicht nur mit gefaultem Schlamm, sondern auch mit Rohschlamm, wie er aus den Absetzbecken der Kläranlagen kommt, betrieben werden kann. Dadurch entfallen hohe Aufwendungen für Faultürme etc. und zusätzlich sind die notwendigen Bestandteile an organischer Trockensubstanz des Ausgangsproduktes häufig ohne Zugabe fremder Kohlenstoffträger zu erreichen.

Als letzter Schritt des Verfahrens folgt nach der Vorrotte eine mehrwöchige, aerobe Nachrotte, die nicht in geschlossenen Behältern vor sich gehen muß und auch keine aktive Belüftung erfordert.

Durch die dann tätigen Mikroben und auch Pilze, ergibt sich ohne Energiezufuhr ein Temperaturniveau während der Nachrotte von 10 bis 90°, ohne daß es zur Selbstentzündung kommen kann. Das sich ergebende Temperaturniveau hängt vorzugsweise von der Menge und Schütthöhe des zusammen gelagerten Substrates ab. Diese Nachrotte kann bei Verwendung als Dünger bereits auf dem landwirtschaftlichen Boden stattfinden, wobei aufgrund der dünnen Streuung ein entsprechend geringes Temperaturniveau gehalten wird.

Das beschriebene Verfahren läuft dann besonders gut ab, wenn es durch entsprechend gestaltete Vorrichtungen und Vorrichtungsteile gefördert wird.

Hierzu gehören Behälter zum Durchführen der Vorrotte, die allseits geschlossen und isoliert sind, um die entstehende Wärme nutzen zu können. Bekannt ist es, solche Behälter mit einem abnehmbaren Deckel auszustatten, in dem eine Luftabsaugeinrichtung angeordnet ist, die in den Boden des Behälters eingeblasene Luft nach Durchlaufen des Substrates wieder entfernt.

Diese Behälter sollen eine Höhe von maximal zwei Metern zulassen, da höhere Schütthöhen eine zu starke Eigenpressung des Substrates bewirken. Die Beschickungseinrichtung für die Behälter muß so beschaffen sein, daß über die gesamte Grundfläche des Behälters eine gleich hohe Schüttung ohne Kegelbildung möglich ist. Zwar ist der mechanische Aufwand zum späteren Verteilen eines Schüttkegels gering, jedoch reicht diese mechanische Verteilung bereits aus, um eine Pressung im Substrat zu bewirken, die das Porenvolumen bereits deutlich um einige Prozent absenkt.

Wichtig ist auch, daß die Wände des Behälters sich nach oben erweitern, so daß bei der während der Vorrotte stattfindenden Volumenverminderung das nach unten sinkende Substrat gleichzeitig zur Mitte hin zusammengeschoben wird, so daß keine größeren Risse durch die Masseverminderung entstehen können, denn durch solche großflächigen Risse würde die von unten eingeblasene Luft auf direktem Weg und ohne innige Berührung mit dem Substrat durch den Behälter nach oben laufen.

Andererseits darf die Neigung der Behälterwände nach oben und außen nicht zu groß sein, da die außerhalb der Bodenfläche des Behälters in der Höhe gelegenen Bereiche des Substrates schlecht durch die von unten eingeblasene Luft versorgt werden, welche in aller Regel vertikal nach oben steigt. Dadurch können sich gerade in den höheren Bereichen der Behälter an den Rändern Faulnester bilden, die die gesamte Charge zum mikrobiellen Umkippen bringen können.

Aus den genannten Gründen erstreckt sich von den meist viereckigen Behältern eine Seite meist unter einem Winkel von etwa 20° von der Senkrechten abweichend nach oben und außen. Diese stark geneigte Seite dient als Schüttfläche beim Ausschütten des Behälters, die in aller Regel als LKW-Container konzipiert und gehandhabt werden. Alle anderen Wände des Behälters sind wesentlich steiler, also nur um etwa 1 bis 10° von der Senkrechten abweichend, konzipiert.

Zur Belüftung des Behälterinhaltes besitzt dieser über seinem eigentlichen Boden einen luftdurchlässigen Boden aus stabilem, meist metallischem, Gitterrost, auf welchem ein wesentlich feinmaschigeres Kunststoffgewebe aufgelegt ist, dessen Maschenweiten unter der Korngröße des Substrates liegt, also eine Maschenweite von weniger als 2 Millimeter besitzt. Unter dem Gitterrost wird die Luft in den Behälter eingeblasen und durch Leitbleche etc. über die gesamte Bodenfläche des Behälters verteilt, bevor die Luft nach oben durch das Kunststoffgewebe in das Substrat aufsteigt.

Auf diese Art und Weise können die üblichen Container-LKWs zum transportieren und Entleeren der Behälter eingesetzt werden und aufgrund der Gestaltung des Behälters ist nur mit geringem Ausschuß einiger weniger Chargen zu rechnen.

Die Luftabsaugung geschieht am höchsten Punkt des Deckels, wobei an den tiefsten Punkten - meist den Umfangskanten auf der Innenseite des Deckels - Vorrichtungen zum Auffangen eines wässerigen Kondensats vorgesehen sind. Dieses Kondensat schlägt sich auf der Innenseite des Deckels als relativ kalter Fläche nieder und fließt bei entsprechender Neigung der Deckelinnenseiten zu den tiefsten Punkten bzw. Kanten ab. Durch die Vorrichtungen zum Auffangen wird verhindert, daß dieses Kondensat in den Innenraum des Behälters, meist immer an den gleichen Stellen, zurücktropft und partielle Überfeuchtungen und damit Faulnester etc. verursacht.

Der gleiche Effekt kann auch dadurch erzielt werden, daß am Deckel, im Abstand unter seiner Unterseite, eines der bekannten luftdurchlässigen, jedoch wasserdichten Gewebe über die gesamte Unterseite des Deckels gespannt wird. Hierdurch kann die mit Feuchtigkeit gesättigte Luft durch das Gewebe nach oben zum Deckel aufsteigen, das dort teilweise kondensierende Wasser tropft jedoch nur auf das Gewebe und nicht durch das Gewebe hindurch zurück in das Substrat. Auch in diesem Fall müssen an den tiefsten Punkten des Gewebes Auffangvorrichtungen für das Kondensat geschaffen werden bzw. an den Stellen, die dann die tiefsten Stellen des Gewebes sind, wenn der Deckel zum Öffnen des Behälters aufgeklappt wird.

Das Kunststoffgewebe auf dem Gitterrost des Behälters besteht aus Fäden, die keinen runden Querschnitt aufweisen, sondern einen etwa halbrunden oder kegelstumpfförmigen Querschnitt, deren größte Seite nach oben gerichtet ist. Dies bewirkt, daß die Maschenweite auf der Oberseite des Kunststoffgewebes größer ist als auf seiner Unterseite, also sich zur Unterseite hin erweitert, dadurch ist sichergestellt, daß jedes von oben in das Gewebe eindringende Körnchen nach unten durch das Gewebe hindurchfällt und die entsprechende Pore nicht verstopft wird, im Gegensatz zu einem trichterförmig von oben nach unten sich verjüngenden Verlauf der einzelnen Pore.

Die oben aus dem Substrat ausströmende Luft ist stark mit Feuchtigkeit und Geruchsstoffen gesättigt, weshalb ein dichtes Schließen der Deckel auf den Behältern erforderlich ist. Diese brüdenähnliche Luft wird in aller Regel in die biologische Stufe einer Kläranlage geleitet, wo die Geruchsstoffe gebunden werden und wobei gleichzeitig eine Sauerstoffzufuhr dieses Schlammes gewährleistet wird.

Die Abluftbrüden enthalten neben Kohlenmonoxid, Kohlendioxid und Schwefeldioxid sowie Ammoniak weitere geruchsintensive Stoffe wie Limone, Limonin, Dimethylsulfide und deren Derivate, sowie Undecan und Dodecan und weitere, auch Heteroatome enthaltende, aliphatische Verbindungen ,wobei unter Umständen noch weitere geruchsintensive Substanzen hinzutreten können.

Zur Neutralisierung dieser Bestandteile werden die Abluftbrüden zunächst in einem Kontaktwäscher mit Belebtschlamm oder Abwasser in Kontakt gebracht. Bei starker Befrachtung der Brüden mit feinen Feststoffteilchen kann eine zusätzliche, vorherige Ausfilterung dieser Feststoffe notwendig werden, um ein Verstopfen des Kontaktwäschers zu vermeiden.

Nach dem Belebtschlamm-Wäscher durchläuft die Abluft einen sauer betriebenen Wasserstoffperoxid-Wäscher, sowie gegebenenfalls einen zusätzlichen alkalischen Wäscher.

Der mit Belebtschlamm oder Abwasser betriebene Kontaktwäscher besteht dabei vorteilhafterweise aus einem aufrecht stehenden, hohen Hohlkörper, in welchem Zwischenböden angeordnet sind, die Schlitze, Löcher oder andere ausreichende Durchbrüche aufweisen. Auf diesen Zwischenböden sind sog. Tropfkörper aufgeschichtet, in aller Regel Kunstoffkörper mit großer spezifischer Oberfläche, wie Stäbchen und vor allem auch komplizierter geformte Teile mit möglichst großer Oberfläche. Durch einen derart ausgestatteten Behälter werden die Abluftbrüden von unten nach oben hindurchgeleitet, während Belebtschlamm oder Abwasser einer Kläranlage von oben nach unten hindurchgeführt wird, indem dieser flüssige Bestandteil auf der obersten Ebene der Tropfkörper möglichst fein verteilt, beispielsweise versprüht, wird und dann durch die einzelnen Ebenen von Tropfkörpern nach unten tropft und sickert.

Dabei bildet sich ein etwa 1 bis 10mm starker Belag auf der Oberfläche der Tropfkörper, der die biologisch aktiven Mikroben enthält und einen innigen Kontakt der herabtropfenden Flüssigkeit mit der von unten nach oben hindurchströmenden Abluft bewirkt.

Im Bereich der Zwischenböden sind üblicherweise zusätzlich Spülvorrichtungen zum Hochdruckspülen angeordnet, um eine mechanische Reinigung der Öffnungen in den Zwischenböden und teilweise auch der Tropfkörper zu ermöglichen.

Der Trockensubstanzgehalt des Belebtschlammes sollte dabei zwischen 0,4 und 2,0% liegen, um die Geruchstoffe der Abluft optimal aufnehmen zu können. Je nach Mikrobengehalt des Belebtschlammes ist dabei pro Kubikmeter hindurch gepumpter Abluft Belebtschlamm mit etwa 1 kg Trockensubstanzanteil notwendig.

Dieser Trockensubstanzgehalt des Belebtschlammes kann entsprechend niedriger liegen, wenn ein entsprechend hoher Anteil von feinen Feststoffen in den Abluftbrüden enthalten ist. In diesem Fall kann unter Umständen anstelle von Belebtschlamm auch Abwasser einer Kläranlage verwendet werden, welches wesentlich weniger Trockensubstanzanteil aufweist.

Ein solcher Durchsatz ist zwar am einfachsten mit einem stetigen Fluß an Belebtschlamm zu erreichen, jedoch ist andererseits die Reinigung der Abluft um so effizienter, je länger der verwendete Belebtschlamm im Wäscher verbleibt, um den darin befindlichen Mikroben Zeit zum adaptieren an das Milieu der Abluft zu geben. Insbesondere sind dabei Mikroben notwendig, die zum Abbau von schwefelhaltigen Verbindungen geeignet sind. Auch eine Zugabe derartiger Mikroben in den Belebtschlamm ist möglich. Am einfachsten ist die Erhaltung des Mikrobenbestandes zu sichern, wenn der Belebtschlamm wenigstens teilweise nach dem Kontakt mit der Abluft wieder dem Belebtschlamm vor dem Kontaktieren der Abluft zugeführt wird, um durch diesen Rückgutanteil dem Belebtschlamm bereits einen Grundstock an den benötigten Mikroben zu geben.

Mit einem solchen Belebtschlamm-Wäscher können jedoch bestimmte Substanzen, wie beispielsweise Dimethylsulfide und deren Derivate, nicht neutralisiert werden. Diese Stoffe werden in einem anschließend von der Abluft durchlaufenen weiteren Wäscher neutralisiert, der analog aufgebaut ist, anstelle von Schlamm jedoch mit einer Wasserstoffperoxid- Lösung aus Wasser und etwa 5 bis 15% $H_2O_2$ betrieben wird. Allerdings ist dieser sauer betriebene Wäscher kein Durchlaufwäscher wie der Belebtschlammwäscher, sondern die Lösung wird permanent im Kreis geführt, wobei pro Tag die entsprechende Menge an Wasserstoffperoxid, also etwa

1 bis 10Kg, zugegeben wird. Nur in längeren zeitlichen Abständen wird das Wasser nach entsprechender Verschmutzung komplett gewächselt.

Sollten nach Durchlaufen des sauer betriebenen Wasserstoffperoxid-Wäschers noch nicht entfernte Geruchsstoffe in der Abluft enthalten sein, so werden diese nochmals durch einen Wäscher geleitet, der analog zum Wasserstoffperoxid-Wäscher gestaltet ist, jedoch alkalisch betrieben wird, indem dem Wasser statt Wasserstoffperoxid Natronlauge zugegeben wird.

Anstelle des Belebtschlammwäschers ist ein Hindurchpumpen der Abluft durch die biologische, ohnehin belüftete, Stufe einer benachbarten Kläranlage möglich.

Je nach Belüftungssystem sind jedoch vorher feste Schwebstoffe aus der Abluft zur Verhütung von Verstopfungen auszufiltern und korrodierende Materialien zu vermeiden.

Vorher wird diese Abluft jedoch über einen Wärmetauscher geleitet, um die enthaltene Wärme für das Vorwärmen der bei der Vorrotte einzublasenden Luft oder das Vorwärmen des Schlammes bereits vor der mechanischen Entwässerung zu verwenden.

Da aber eine vollständige Gasdichtigkeit zwischen Behälter und Deckel einen hohen konstruktiven Aufwand erfordert, wird die entstehende Abluft direkt aus den Behältern mittels Sauggebläse abgesaugt. Hierbei versorgt in der Regel ein Absauggebläse mehrere Behälter bzw. deren Deckel. Dabei ist für jeden einzelnen Deckel ein Ventil vorzusehen, welches die Leitung zum Absauggebläse unterbricht, falls dieser Deckel geöffnet wird. Sind derartige Ventile nicht vorgesehen, würde beim Öffnen eines Deckels das Gebläse aufgrund des dort vorhandenen geringsten Widerstandes faßt ausschließlich aus diesem Deckel absaugen, und zwar vornehmlich Umgebungsluft. Die anderen, an dieses Absauggebläse angeschlossenen Behälter würden jedoch kaum mehr unter einem Unterdruck stehen, so daß die dann vorhandene Ausströmung der Brüden dort zwischen Behälter und Deckel ausreichen wurde, um eine Geruchsbelästigung der Umgebung hervorzurufen.

Ein Teil des nach der Vorrotte bzw. Nachrotte erhaltenen Produktes wird in einen Rückgutbehälter gegeben, aus welchem es dann zur Zugabe in den Rohschlamm bzw. entwässerten Schlamm als Ausgangsprodukt zeitlich versetzt wieder entnommen wird. Diese Rückgutbehälter sollten einen länglichen Grundriß besitzen und überdacht sein, um eine Überfeuchtung durch Regen zu verhindern. Der längliche Grundriß ist vorteilhaft, weil auf diese Art und Weise eine Entnahme des Rückgutes mittels einem in der Unterseite des Rückgutbehälters eingebauten Schubbodens möglich ist. Dieser Schubboden besteht aus in Längsrichtung geteilten Hälften, die sich langsam gegenläufig bewegen und jeweils aus hintereinander angeordneten, sehr flachen Keilen bestehen. Die annähernd senkrecht stehende Stirnfläche dieser Keile weist in Transportrichtung, so daß diejenige Hälfte des Schubbodens, die sich in Richtung der senkrechten Stirnfläche bewegt, das gesamte, darauf aufliegende Substrat in Richtung des Ausgangsendes des Rückgutbehälters bewegt, während die andere Hälfte sich unter dem Rückgut über die leicht ansteigende Keilfläche hindurchbewegt, bis die Bewegung der beiden Hälften gegenläufig umgekehrt wird. Auf diese Art und Weise wird - anders bei Entnahme mittels Bagger-Radladerschaufel oder ähnlichem - keine Verfestigung des locker aufgeschütteten Rückgutes bewirkt. Diese leichte, tuffige Gestaltung mit hohen Porenanteil ist wichtig um später eine innige Vermengung mit dem Rohschlamm zu ermöglichen.

Die Seitenwände des Rückgutbehälters sind dabei wiederum um einige Grad, vorzugsweise um 8° nach innen und oben geneigt, um bei einer Masse Verminderung und damit einem Absinken des Rückgutes im Rückgutbehälter von oben nach unten kein Zusammenführen sondern eher ein Auseinanderlaufen des Rückgutes zu ermöglichen, um keine zusätzlichen Brückenbindungen zu erzeugen bzw. zwischen den Partikeln vorhandene Brückenbindungen nicht weiter zu verstärken.

Am Auslauf des Rückgutbehälters fällt das Rückgut in einen bekannten Doppelwellenmischer, der zunächst eine Zerkleinerung des Rückgutes auf Korngrößen von 5 bis 10 mm bewirkt.

Der Doppelwellenmischer fördert auf ein Förderband, welches den Transport über die notwendigen Distanzen bis zu der Misch- und Strukturiereinheit (Kreuzschlagmischer und zweiter Doppelwellenmischer) überbrückt. Eine Förderung mittels Förderschnecke oder anderer Förderanlagen würde wiederum eine unerwünschte Pressung und damit Strukturveränderung des Rückgutes bewirken.

Vor der Zugabe in den Rohschlamm durchläuft das Rückgut zusätzlich wenigstens eine Siebkorbkreuzschlagmühle zur weiteren Zerkleinerung. Bei derartigen Mühlen läuft ein trommelförmiger Siebkorb und ein darin zentrisch gelagertes Kreuzschlagwerk gegenläufig um, wobei die Relativgeschwindigkeit der beiden Teile, deren radialer Abstand zueinander sowie die Lochform und Lochgröße des Siebkorbes Einfluß auf Größe und Struktur des durchlaufenden Materials nehmen. Vorzugsweise wird hier mit Relativgeschwindigkeiten von etwa 1400 Umdrehungen pro Minute gearbeitet und ein Lochblech verwendet, welches eckige Löcher besitzt, deren Kanten stärker abscheren als diejenigen mit runden Löchern. Die eckigen Löcher sollten mit der Längsseite in Umfangsrichtung ausgerichtet sein und eine Seitenlänge der längeren Seite von etwa einem cm besitzen.

Die Vermischung des Rückgutes mit dem Rohschlamm erfolgt wiederum in einem Doppelwellenmischer, wodurch ein Produkt entsteht, dessen Partikelgröße etwa 1 bis 6 mm im Durchmesser beträgt.

Vorzugsweise ist das beschriebene Verfahren daher mit einer Anlage durchzuführen, welche alle soeben beschriebenen Aggregate enthält, da hierdurch auf mechanischem Wege die besten Voraussetzungen zum Ablauf des Verfahrens vorgegeben werden.

Das beschriebene Verfahren stellt damit ein einstufiges Verfahren zur Behandlung von Rohschlämmen dar, bei der während der Vorrotte aufgrund des erzielten Temperaturniveaus bereits eine Pasterisierung und während der länger andauernden Nachrotte ein zusätzliches Hygienisieren des Substrates durch die dort arbeitenden Mikroben und Pilze stattfindet. Die Verfahrenskosten sind gegenüber dem bekannten Verfahren wesentlich geringer und auch die Investitionskosten sind so gering, daß auch Anlagen mit kleiner Kapazität effektiv aufgebaut und betrieben werden können.

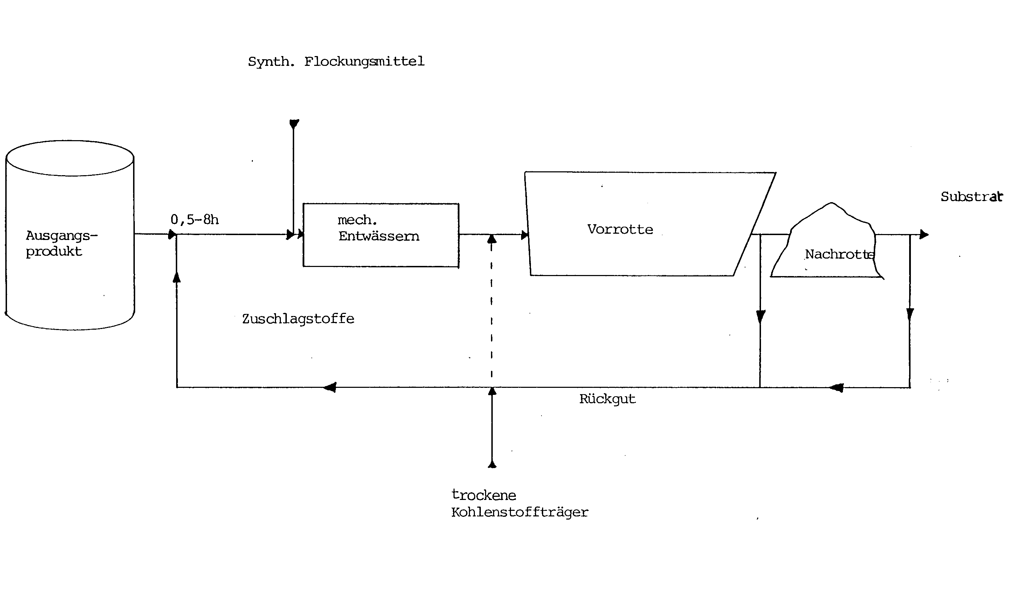

In Fig. 1 ist eine beispielhafte Verfahrensskizze des erfindungsgemäßen Verfahrens dargestellt. Das Ausgangsprodukt, meist Rohschlamm, teilweise auch ein Gemisch aus Rohschlamm und vorhandenem Faulschlamm, wird chargenweise auf seinen OTS und TS-Gehalt untersucht und entsprechend den Erfordernissen des Verfahrens mit Rückgut und/oder einem fremden trockenen Kohlenstoff-Träger als Zuschlagstoff vermengt. Nach 0,5 bis 8 Stunden Verweildauer zur Homogenisierung wird das synthetische Flockungsmittel kurz vor dem mechanischen Entwässern zugegeben. Falls es die Struktur erfordert, wird nach dem mechanischen Entwässern nochmals geringfügig Rückgut und/oder fremder Zuschlagstoff zugegeben, um die gewünschte tuffige Beschaffenheit zu erzeugen, die für ein optimales Ablaufen der biologischen, chargenweisen Trocknung notwendig ist. Bereits nach der Vorrotte kann die Entnahme des Rückgutes als Impfstoff für das Ausgangsprodukt erfolgen. Die anschließend durchgeführte mehrwöchige Nachrotte bringt eine weitere Volumenreduzierung und Kohlenstoffabbau und arbeitet mit anderen Mikrobenstämmen. Je nach Bedarf wird auch erst nach der Nachrotte das Rückgut entnommen.

**Patentansprüche**

1. Verfahren zum Umwandeln von Klärschlamm in ein humusähnliches Substrat mit folgenden Schritten.

   a) Zugabe von organischen Zuschlagstoffen zur Erhöhung des OTS-Gehaltes und als Impfstoff,

b) Zugabe von synthetischen Flockungsmitteln,

c) mechanischem Entwässern auf mindestens 20% TS vorzugsweise über 40% TS, hiervon wiederum mindestens 50% OTS,

d) chargenweise aerobe, mikrobielle Vorrotte über fünf bis acht Tage bei Temperaturen von 50 bis 90° C, Schütthöhe ≤ 2m, 30% bis 50% Porenvolumen und aktiver, gleichmäßiger Belüftung, wobei OTS in Kohlendioxid und Wasser, sowie Substrat umgesetzt wird, wobei der TS-Gehalt am Ende der Vorrotte 60 bis 65 % betragen soll, wovon etwa 1/3 bis 1/4 OTS ist,

e) aerobe, mehrwöchige Nachrotte ohne aktive Belüftung bei Temperaturen von 10 bis 90° C durch Mikroben und vornehmlich Pilze bis auf etwa 80% TS, wobei die durch die Mikrobentätigkeit erzeugte Wärme zum Halten des Temperaturniveaus der Nachrotte verwendet wird, wobei Schritt a) zum Großteil vor dem Schritt b) stattfindet und die Schritte c), d) und e) in dieser Reihenfolge nach den Schritten a) und b) vorgenommen werden und wobei die bei Schritt d) entstehende Wärme zum Vorwärmen der dort einzublasenden Luft und/oder zum Vorwärmen des Ausgangsproduktes benutzt wird.

2. Verfahren nach Anspruch 1,
   **dadurch gekennzeichnet, daß**
   zur Belüftung während der Vorrotte pro Stunde und Kubikmeter Substrat fünf bis zehn Kubikmeter Luft, vorzugsweise zehn Kubikmeter, mit einer Temperatur von 45 bis 75° C und möglichst geringer Feuchtigkeit mit weniger als einer Atmosphäre Überdruck gleichmäßig in die Charge eingebracht werden.

3. Verfahren nach Anspruch 1 oder 2,
   **dadurch gekennzeichnet, daß**
   als Zuschlagstoffe gemahlenes Rückgut, also Substrat nach Durchlaufen der Vorrotte oder der Nachrotte, und/oder organische, trockene Kohlenstoffträger wie etwa Sägemehl, ggfs mit Enzymen behandelt, zugegeben werden.

4. Verfahren nach Anspruch 3,
   **dadurch gekennzeichnet, daß**
   das Rückgut eine Korngröße in der Größenordnung von etwa 1 bis 4 mm und eine Kornstruktur mit möglichst großer Oberfläche besitzt und dem Ausgangsprodukt möglichst schonend beigemischt wird.

5. Verfahren nach einem der vorhergehenden Ansprüche,

**dadurch gekennzeichnet, daß**
der Klärschlamm noch vor der Zugabe der Zuschlagstoffe auf etwa 40 bis 65° C vorgewärmt wird.

6. Verfahren nach einem der vorhergehenden Ansprüche,
   **dadurch gekennzeichnet, daß**
   die Zugabe der Zuschlagstoffe etwa 0,5 bis acht, insbesondere drei bis vier Stunden vor der Zugabe der synthetischen Flockungsmittel und dem unmittelbar danach erfolgenden mechanischen Entwässern erfolgt.

7. Verfahren nach einem der vorhergehenden Ansprüche,
   **dadurch gekennzeichnet, daß**
   der Klärschlamm als Rohschlamm und/oder einem Gemisch aus Rohschlamm und gefaultem Schlamm als Ausgangsprodukt eingesetzt wird.

8. Vorrichtung zur Durchführung des Verfahrens gemäß den Ansprüchen 1 bis 7 mit wenigstens einem geschlossenen, allseits isolierten wenigstens einem Behälter mit abnehmbarem Deckel zur Durchführung der Vorrotte, sowie einer Luftabsaugeinrichtung im Deckel des Behälters und einer Einrichtung zum Beschicken der Behälter,
   **dadurch gekennzeichnet, daß**
   die Behälter maximal eine Füllhöhe von 2 m zulassen,

   - die Beschickungseinrichtung eine lockere Schüttung ohne Kegelbildung, also gleichmäßig über die gesamte Fläche des Behälters ermöglicht,
   - sich alle Wände des Behälters bis auf eine unter einem Winkel von 1 bis 10° von der Senkrechten abweichend schräg nach oben und außen erstrecken, während sich eine kurze Seite unter einem Winkel von etwa 20° von der Senkrechten abweichend nach oben außen erstreckt,
   - der Behälter über dem eigentlichen Boden einen weiteren, bis zu den Außenwänden reichenden, luftdurchlässigen Boden aus einem stabilen Gitterrost aufweist, auf welchem ein Kunststoff-Gewebe mit einer Maschenweite von weniger als 2 Millimeter aufliegt, welches sich ebenfalls

   wenigstens bis zu den Seitenwänden erstreckt.

9. Vorrichtung nach Anspruch 8,
   **dadurch gekennzeichnet, daß**
   die Luftabsaugung am höchsten Punkt des Deckels des Behälters stattfindet und an den tiefsten Punkten bzw. Kanten der Innenflächen des Deckels Vorrichtungen zum Auffangen des wässerigen Kondensats vorhanden sind, die ein Zurücktropfen dieses Kondensats in den Innenraum des Behälters verhindern.

10. Vorrichtung nach Anspruch 8 oder 9,
**dadurch gekennzeichnet, daß**
der Deckel eine im wesentlichen ebene Unterseite besitzt und über die gesamte Fläche des Deckels im Abstand unterhalb seiner Unterseite ein Gewebe angebracht ist, welches zwar von unten nach oben gasförmige Stoffe hindurchtreten läßt, jedoch keine Flüssigkeitstropfen von oben nach unten hindurchtreten läßt, sowie Vorrichtungen zum Sammeln einer auf der Oberseite dieses Gewebes abgelagerten Flüssigkeit bei Schrägstellung des Deckels, wie sie bei seiner Öffnung erfolgt.

11. Vorrichtung nach Anspruch 8, 9, oder 10,
**dadurch gekennzeichnet, daß**
das Kunststoffgewebe auf dem Gitterrost des Behälters aus Fäden besteht, welche einen etwa halbrunden Querschnitt besitzen, deren flache Seite nach oben gerichtet ist, so daß die Maschenweite an der Oberseite des Kunststoffgewebes am geringsten ist und sich zur Unterseite des Kunststoffgewebes hin erweitert.

12. Vorrichtung nach einem der Ansprüche 8 bis 11,
**dadurch gekennzeichnet, daß**
die Behälter an der Außenseite mit den notwendigen Ausstattungen zur Beförderung mit den bekannten Container-LKWs geeignet sind.

13. Vorrichtung zur Durchführung des Verfahrens gemäß den Ansprüchen 1 bis 7,
**gekennzeichnet durch**
einen Rückgutbehälter zur Aufnahme des Substrats aus der Vorrotte bzw. Nachrotte, welches dem Ausgangsstoff wieder zugesetzt werden soll, welcher einen länglichen Grundriß besitzt, überdacht ist, und über die gesamte Länge und Breite mit einem in Längsrichtung zweigeteilten Schubboden ausgestattet ist, dessen Hälften getrennt gegenläufig langsam oszillieren und jeweils aus hintereinander angeordneten, wenige Grad flachen Keilen bestehen, deren etwa senkrecht stehende Stirnseiten in Transportrichtung gerichtet sind, wobei die Seitenwände des Rückgutbehälters um 5 bis 10, vorzugsweise 8° nach innen oben geneigt sind.

14. Vorrichtung zur Durchführung des Verfahrens nach den Ansprüchen 1 bis 7,
**gekennzeichnet durch**
einen Doppelwellenmischer am Auslauf des Rückgutbehälters, der eine Zerkleinerung des Rückgutes auf eine Korngröße von 5 bis 10 mm ermöglicht.

15. Vorrichtung zur Durchführung des Verfahrens nach den Ansprüchen 1 bis 7,
**gekennzeichnet durch**
ein Förderband zum Transportieren des Rückgutes zur Eingabestelle in das Ausgangsprodukt.

16. Vorrichtung zur Durchführung des Verfahrens nach den Ansprüchen 1 bis 7,
**gekennzeichnet durch**
wenigstens eine Siebkorb-Kreuzschlag-Mühle zum Zerkleinern des Rückgutes vor
der Eingabe in das Ausgangsprodukt beim Verfahren nach einem der Ansprüche 1 bis 7
**dadurch gekennzeichnet, daß**
Größe und Form des Lochbleches der Mühle sowie die Relativgeschwindigkeit zwischen dem Kreuzschlagwerk und dem Lochblech so gewählt sind, daß eine Struktur des Rückgutes erreicht wird, die einen kleinsten Querschnitt von unter 1 mm und einen größten Querschnitt von höchstens 4mm pro Korn aufweist.

17. Vorrichtung nach Anspruch 15,
**dadurch gekennzeichnet, daß**
die Relativgeschwindigkeit zwischen dem Lochblech und dem Kreuzschlagwerk ca. 1400 Umdrehungen/Min. beträgt und das Lochblech eckige Löcher besitzt, deren längere Seite etwa in Umfangsrichtung ausgerichtet sind und die etwa 1 cm lang sind.

18. Vorrichtung nach Anspruch 15,
**gekennzeichnet durch**
einen Doppelwellenmischer zum Vermischen des Rückgutes mit dem Ausgangsprodukt gemäß Punkt a) des Verfahrens nach Anspruch 1,
**dadurch gekennzeichnet, daß**
der Doppelwellenmischer mit einer solchen Geschwindigkeit läuft, daß die entstehende Partikelgröße am Austritt des Doppelwellenmischers etwa 1 bis 6 mm im Durchmesser beträgt.

19. Vorrichtung nach Anspruch 17,
**gekennzeichnet durch**
- einen Behälter zum Durchführen der Vorrotte, insbesondere nach den Ansprüchen 9 bis 12,
- einen Rückgutbehälter zur Aufnahme des Substrats aus der Vorrotte bzw. der Nachrotte, welches dem Ausgangsprodukt zugesetzt werden soll, insbesondere nach Anspruch 14,

- einen Doppelwellenmischer am Ende des Rückgutbehälters, insbesondere nach Anspruch 17,

- wenigstens ein Förderband zum Transportieren des grob zerkleinerten Rückgutes zur Eingabestelle in das Ausgangsprodukt, insbesondere nach Anspruch 15

- wenigstens eine Siebkorb-Kreuzschlag-Mühle zur feinen Zerkleinerung des Rückgutes, insbesondere nach Anspruch 16 oder 17

und

- einen Doppelwellenmischer zum Vermischen des Rückgutes mit dem Ausgangsprodukt des Verfahrens, insbesondere nach Anspruch 18.

20. Vorrichtung nach einem der Ansprüche 8 bis 12, wobei mehrere Behälter-Deckel mit separaten Leitungen an ein gemeinsames Absauggebläse angeschlossen sind,

**dadurch gekennzeichnet**, **daß**

in jeder Leitung ein Ventil angeordnet ist, welches beim Öffnen dieses Deckels automatisch diese Leitung verschließt.

EP 0 463 546 A1

Synth. Flockungsmittel

Ausgangs-produkt

0,5-8h

mech. Entwässern

Vorrotte

Nachrotte

Substrat

Zuschlagstoffe

Rückgut

trockene Kohlenstoffträger

**Europäisches Patentamt**

# EUROPÄISCHER RECHERCHENBERICHT

Nummer der Anmeldung

## EP 91 10 9990

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-2 423 744   (INGENIEURB!RO DILGER)<br>– – – | 1 | C 05 F 7/00<br>C 05 F 17/02 |
| A | DE-A-2 423 744   (* das ganze Dokument *)<br><br>– – – | 2,3,5,8,<br>13,15 | C 05 F 17/00 |
| Y | EP-A-0 153 282   (PURAC AB)<br>– – – | 1 | |
| A | EP-A-0 153 282   (* Ansprüche 1,2,5-10 * )<br>* Seite 1, Zeile 20 - Seite 3, Zeile 18 * * * Seite 4, Zeile 13 - Zeile 34 * * * Seite 5, Zeile 28 - Seite 7, Zeile 12 * * * Seite 8, Zeile 27 - Seite 9, Zeile 29 * *<br>– – – | 3,6 | |
| A | DE-A-3 800 201   (GREEB, H.)<br>* Ansprüche 1-3 * * * Spalte 2, Zeile 40 - Zeile 52 * * * Spalte 3, Zeile 15 - Zeile 55 * *<br>– – – | 1,3 | |
| A | EP-A-0 235 637   (BRÖSAMLE, P)<br>* Spalte 9, Zeile 39 - Zeile 49 * *<br>– – – – – | 1 | |

| RECHERCHIERTE SACHGEBIETE (Int. Cl.5) |
|---|
| C 05 F |

Der vorliegende Recherchenbericht wurde für alle Patentansprüche erstellt

| Recherchenort | Abschlußdatum der Recherche | Prüfer |
|---|---|---|
| Den Haag | 29 Oktober 91 | RODRIGUEZ FONTAO M-B |